(19) Europäisches Patentamt / European Patent Office / Office européen des brevets

(11) **EP 2 784 698 A1**

(12) **EUROPEAN PATENT APPLICATION**

(43) Date of publication:
**01.10.2014 Bulletin 2014/40**

(51) Int Cl.:
***G06F 17/30*** (2006.01)

(21) Application number: **13305367.8**

(22) Date of filing: **26.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **ALCATEL LUCENT**<br>**92100 Boulogne-Billancourt (FR)** | (72) Inventors:<br>• **Christophe, Benoit**<br>  **91300 Massy (FR)**<br>• **Boussard, Mathieu**<br>  **77930 Chailly-en-Biere (FR)**<br><br>(74) Representative: **ALU Antw Patent Attorneys**<br>**Intellectual Property and Standards**<br>**Copernicuslaan 50**<br>**2018 Antwerp (BE)** |

(54) **Method and device for determining similarity between semantically described objects**

(57)     Method for determining a similarity between objects semantically described according to an ontology, executed by a determining device, said method comprising:
- obtaining (S1, S2, S3, S4, S5) at least one parameter (Degp, $C_R$, $\varphi$, R, W),
- selecting (S6) a similarity function (F) in a set of similarity functions, in function of said at least one parameter (Degp, $C_R$, $\varphi$, R, W),
- determining (S7) a similarity (S) between semantically described objects (o1, o2) with the selected similarity function (F).

$$Deg_p =$$    S1

$$C_R =$$    S2

$$\varphi =$$    S3

$$R =$$    S4

$$W =$$    S5

$$F = f(Deg_p, C_R, \varphi, R, W)$$    S6

$$S = F(o1, o2)$$    S7

Fig. 2

**Description**

FIELD OF THE INVENTION

The present invention relates to the field of semantically described objects, for example objects described with an OWL ontology.

BACKGROUND

Different approaches have been proposed to compute the similarity of objects semantically described according to a given ontology. They are mainly of four different types:

1) An approach based on path length measure between nodes of the ontological graph,
2) The feature matching approach uses both common and discriminating features amongst concepts and/or concept instances of the ontology to compute their semantic similarity,
3) The information content approach defines a similarity measure for concepts within a hierarchy based on the variation of the information content conveyed by such concepts and the one conveyed by their immediate common super-concept, and
4) The logic based approach that defines a similarity measure by analyzing the logical constructs that define the concepts they need to compare. Such an approach is typically useful for ontologies where concepts are not defined as mere sub-classes, but are defined in terms of composition, negation, etc of other concepts.

The three first categories (semantic network approaches) focus on the similarity of atomic concepts (in a hierarchy) rather than on composite ones, or focus on very simple ontologies built using simple relations such as "is-a" or "part of". As a consequence, none of them can provide an accurate similarity measure with an ontology containing complex descriptions (i.e. descriptions using an expressive Description Logic such as SHIQ). Approaches of these three categories are more suitable to compute similarities on relatively simple ontologies. Thus, the similarity computation time is also reduced, compared to the fourth category.

The fourth category consists of methods that define a similarity measure based on logical constructors. Such methods allow defining a similarity function having a better accuracy than in the three other categories, as they take into account richer semantics. The drawback of these methods however, is that they require complex concepts to be written in Normal Form, which is exponential regarding the computation time it may require to process.

SUMMARY

It is thus an object of embodiments of the present invention to propose a method and a device for determining similarity between semantically described objects, which do not show the inherent shortcomings of the prior art.

Accordingly, embodiments of the present invention relates to a method for determining a similarity between objects semantically described according to an ontology, executed by a determining device, said method comprising:

- obtaining at least one parameter,
- selecting a similarity function in a set of similarity functions, in function of said at least one parameter,
- determining a similarity between semantically described objects with the selected similarity function.

The at least one parameter may include a degree of precision input by a user.
The at least one parameter may include a complexity of the ontology.
The method may comprise:

- determining a theoretical complexity in function of logical constructs used in the ontology, and
- determining said complexity in function of the theoretical complexity and of the percentages of expressions of the ontology using different logical constructs.

The at least one parameter may include a ratio representing a percentage of objects being semantically described with properties.
The at least one parameter may include a resource level determined in function of the processing resources available for executing a similarity function.
The at least one parameter may include a variable representative of whether a user can wait for the result of the similarity function.

The set of similarity functions may comprise a function implementing a path length approach using the properties interlinking ontological concepts, a function implementing an information content approach, a function implementing a logic based approach capable of handling ALC logic, and/or a function implementing a logic based approach capable of handling SHIQ logic.

Embodiments of the invention also provide a computer program comprising instructions for performing the method mentioned before when said instructions are executed by a computer.

Embodiments of the invention also relate to a device for determining a similarity between objects semantically described according to an ontology, comprising:

- means for obtaining at least one parameter,
- means for selecting a similarity function in a set of similarity functions, in function of said at least one parameter,
- means for determining a similarity between semantically described objects with the selected similarity function.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a structural view of a device for determining a similarity between semantically described objects,
Figure 2 is a flowchart of a method for determining a similarity between semantically described objects, executed by the device of figure 1,
Figures 3 and 4 represent data used by the device of figure 1 for executing the method of figure 2,
Figure 5 is a decision tree representing a set of rules used for executing the method of figure 2.

DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

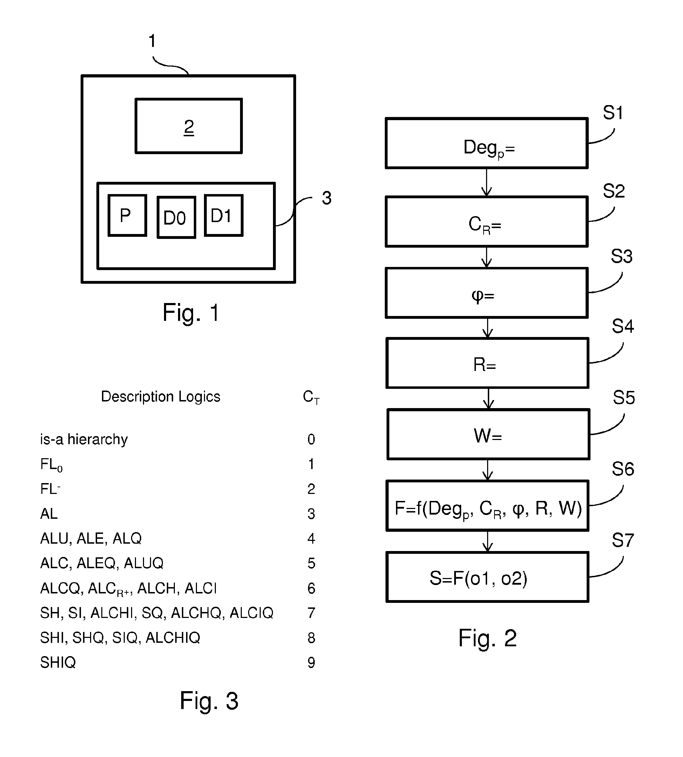

**Figure 1** is a structural view of a device 1 for determining a similarity between semantically described objects.

The device 1 presents the material architecture of a computer and comprises a processor 2 and a memory 3. The memory 3 includes a computer program P, the execution of which causes the device 1 to execute a method for determining a similarity between semantically described objects. The memory 3 also includes data D0 and data D1 used by the computer program P, as described with reference to figures 2 to 5.

**Figure 2** is a flowchart of a method for determining a similarity between semantically described objects. The method of figure 2 is for example executed by the device 1 when the processor 2 executes the computer program P.

The method of figure 2 aims at selecting a similarity function F in a predetermined set of similarity functions, in function of at least one parameter. Thus, when objects are semantically described according to a given ontology associated with a Description Logic, the method of figure 2 allows selecting an appropriate similarity function and determining a similarity between the objects by using the selected similarity function. For this purpose, the device 1 first obtains parameters representing the context of the similarity determination. The parameters may for example relate to preferences of the user, the type of ontology used, the available computing resources...

Steps S1 to S5 of the method of figure 2 give an example of parameters used for selecting a similarity function F. However, embodiments of the invention may use other parameters.

At step S1, the device 1 obtains a desired degree of precision Degp input by the user. The degree of precision Degp may take for example a value in a range between 1 and 3. The value "1" means "low" degree of precision. From an ontological point of view, this means that the user is satisfied if only "is-a" relations are considered. The value "2" means medium precision, meaning that if the logic is for example ALC, then at least the user wants a method considering most of the semantics being used. The value "3" means high precision. In this case, the user wants to apply the best possible and available method (i.e. capable of analyzing best the logical constructs used in the ontology).

At step S2, the device 1 determines the complexity $C_R$ of the ontology used to semantically describe the objects. $C_R$ may for example be a value comprised in the range 0 to 9 and may be determined as follows:

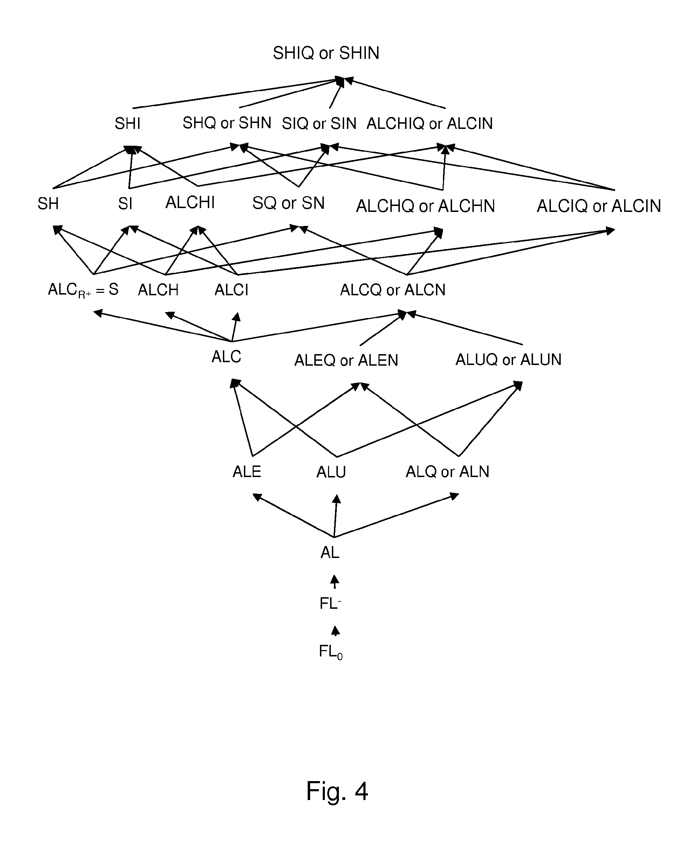

- Data D0 contains a table, shown on **Figure 3,** and a classification tree, shown on **Figure 4.**
- The classification tree contains the most frequently used Description Logics based on their expressiveness. This tree uses arcs representing the "inclusion" relationship between different Description Logics. More precisely, each arc links two different Description Logics. Meaning of this arc is as follow: the Description Logic at the head of the arc extends the Description Logic at the tail of the arc with additional logical constructs. As an example consider Figure 4. In this figure, the ALU Description Logic is linked to the ALC Description Logic, which means that ALU is extended by ALC with some logical constructs (in this case, the logical construct to add is full existential qualification). The tree of figure 4 allows determining all direct less expressive Description Logics of a given Description Logic, by taking all incoming arcs of a given Description Logic and retrieving the Description Logics at the tails of these different arcs. As an example, the direct less expressive Description Logics of ALC are: ALE and ALU.
- The table of figure 3 associates a theoretical complexity $C_T$ with the Description Logics of the tree. For example, ALU, ALE and ALQ have a theoretical complexity $C_T$ of 4.
- Thus, the device 1 analyses the ontology to determine the logical constructs used and thus the Description Logic used. The table of figure 3 gives the corresponding theoretical complexity $C_T$.
- Then, the device 1 determines the real complexity $C_R$ of the ontology, in function of the percentage of expressions of the ontology using different logical constructs. For example, the device 1 determines the percentage of concepts defined with a cardinality constraint, with an existential qualification, etc. These percentages allow knowing if the real complexity $C_R$ of the ontology is close to the theoretical complexity $C_T$ previously obtained. This real complexity $C_R$ is further used to select the most efficient matching similarity measure. The classification tree of Figure 4 gives the direct less expressive Description Logics of the Description Logic used by the ontology. For example, consider an ontology being theoretically based on a SHIQ. Its direct less expressive Description Logics are SHI, SHQ, SIQ and ALCHIQ. If only one term of this ontology is defined with a "role inverse" logical construct, while 1000 terms are defined in total, this low percentage (0.1%) shows that the "real" complexity of the ontology is closer to SHQ than SHIQ. This shows that the real complexity $C_R$ may be lower than the theoretical complexity $C_T$.
- The real complexity $C_R$ is thus determined based on the following formula, applied between the Description Logic of the ontology and all direct less expressive Description Logics:

For a given theorical Description Logic DL and a given direct less expressive Description Logic $DL_{less}$

$$C_R = \operatorname*{Min}_{DL_{less}} \left( (C_T - 1) + \frac{1}{\left|\{LC / LC \in (DL \cap \neg DL_{less})\}\right|} \sum_{LC \in (DL \cap \neg DL_{less})} \frac{\left|\{A \in O / A \text{ is an axiom using LC}\}\right|}{N} \right)$$

*wherein*:

$DL \cap \neg DL_{less}$ : set of logical constructs that belong to DL and not to $DL_{less}$ $|\{LC / LC \in (DL \cap \neg DL_{less})\}|$: total number of logical constructs in $(DL \cap \neg DL_{less})$ $|\{A \in O/ A$ is an axiom using LC$\}|$: number of axioms in the ontology and using the logical construct LC

$N$ : number of axioms in the ontology

- This formula for determining the real complexity $C_R$ may for example be applied recursively.
- The determination of the real complexity $C_R$ uses data D0 which relate to a predetermined set of Description Logics. By updating the data D0, additional Description Logics may be taken into account.

At step S3, the device 1 determines a ratio $\varphi$ which represents the percentage of individuals being semantically described with properties. Indeed, an ontology can contain both concepts and instances having lots of properties. Thus, the device 1 determines the ratio $\varphi$ of individuals being semantically described with properties. As described later, the ratio $\varphi$ may be used at step S7 to choose between an approach considering the sole hierarchy of concepts or an approach based on semantic networks (i.e. using the hierarchy of concepts as well as their properties).

At step S4, the device 1 determines a resource level R in function of the processing resources available for executing a similarity function. The resource level R may for example take two values "High" and "Low". It may be determined in function of a CPU capacity, a CPU usage ratio, available memory...

At step S5, the device 1 obtains the value of a variable W representative of whether the user can wait for the result of the similarity function. For example, the variable W can take the values "YES" and "NO" and is input by the user.

Steps S1 to S5 have been described as consecutive steps. However, the order described may be changed. Furthermore, some steps may be executed concurrently. Moreover, some steps may be skipped. For example, if Degp=1 at step S1, then steps S2, S4 and S5 may be skipped and the similarity function F may be selected only in function of Degp and $\varphi$ at step S6.

After obtaining the parameters (Degp, $C_R$, $\varphi$, R and W in this example), at step S6, the device 1 selects a similarity function F in a predetermined set of similarity functions, based on the obtained parameters. The selection of step S6 is based on a set of rules defined by data D1.

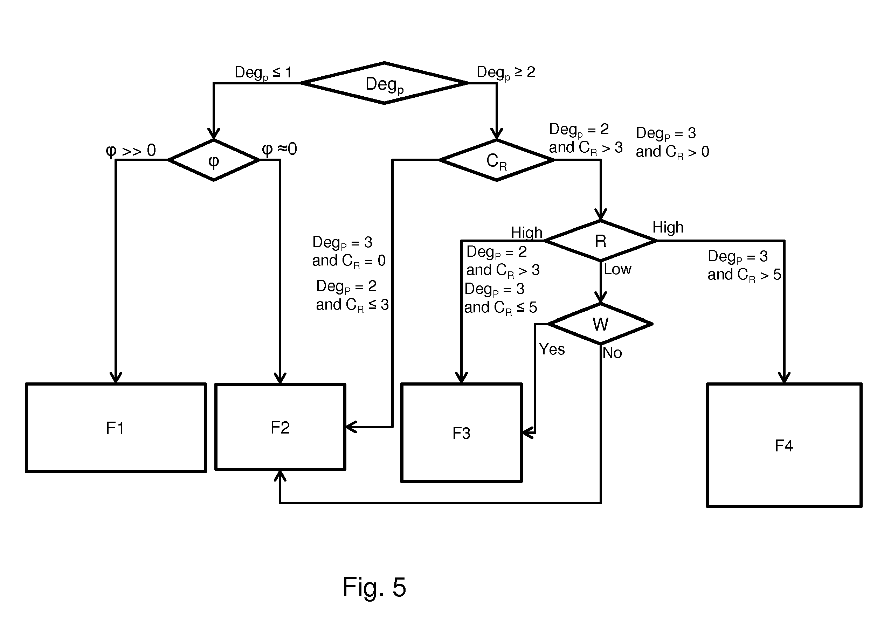

**Figure 5** illustrates an exemplary set of rules defined by data D1 as a decision tree. In the example of figure 5, the predetermined set of similarity functions comprises:

- a function F1 implementing a path length approach using the properties interlinking ontological concepts (inclusion property and others),
- a function F2 implementing an information content approach,
- a function F3 implementing a logic based approach capable of handling ALC logic.
- a function F4 implementing a logic based approach capable of handling SHIQ logic.

In the case of an ontology containing many properties interlinking concepts, the function F2 involves a smaller computation complexity than the other methods. Consequently, with the set of rules of figure 5, the function F2 is selected for example when Degp is low and $\varphi$ is close to 0 (lower than a configurable threshold), when $C_R$ is low or when R is low and the user does not want to wait. The other functions F1, F3 and F4 are selected in other cases in order to provide a more accurate result when desired or when possible.

If a new similarity function become available, data D1 may be updated so that the updated rules allows selecting the new similarity function.

Finally, at step S7, the device 1 determines the similarity S between objects, for example between objects o1 and o2, by using the similarity function F selected at step S6: S = F (o1, o2).

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining a similarity between objects semantically described according to an ontology, executed by a determining device (1), said method comprising:

   - obtaining (S1, S2, S3, S4, S5) at least one parameter (Degp, $C_R$, $\varphi$, R, W),
   - selecting (S6) a similarity function (F) in a set of similarity functions, in function of said at least one parameter (Degp, $C_R$, $\varphi$, R, W),
   - determining (S7) a similarity (S) between semantically described objects (o1, o2) with the selected similarity function (F).

2. Method according to claim 1, wherein said at least one parameter includes a degree of precision (Degp) input by a user.

3. Method according to one of claims 1 and 2, wherein said at least one parameter includes a complexity ($C_R$) of the ontology.

4. Method according to claim 3, comprising:

   - determining a theoretical complexity ($C_T$) in function of logical constructs used in the ontology, and
   - determining said complexity ($C_R$) in function of the theoretical complexity ($C_T$) and of the percentages of expressions of the ontology using different logical constructs.

5. Method according to one of claims 1 to 4, wherein said at least one parameter includes a ratio ($\varphi$) representing a percentage of objects being semantically described with properties.

6. Method according to one of claims 1 to 4, wherein said at least one parameter includes a resource level (R) determined in function of the processing resources available for executing a similarity function.

7. Method according to one of claims 1 to 6, wherein said at least one parameter includes a variable (W) representative of whether a user can wait for the result of the similarity function.

8. Method according to one of claims 1 to 7, wherein said set of similarity functions comprises a function (F1) implementing a path length approach using the properties interlinking ontological concepts, a function (F2) implementing an information content approach, a function (F3) implementing a logic based approach capable of handling ALC logic, and/or a function (F4) implementing a logic based approach capable of handling SHIQ logic.

9. Computer program (P) comprising instructions for performing the method of one of claims 1 to 8 when said instructions are executed by a computer (1).

10. Device (1) for determining a similarity between objects semantically described according to an ontology, comprising:

   - means (2, 3) for obtaining at least one parameter (Degp, $C_R$, $\varphi$, R, W),
   - means (2, 3) for selecting a similarity function (F) in a set of similarity functions, in function of said at least one parameter (Degp, $C_R$, $\varphi$, R, W),
   - means (2, 3) for determining a similarity (S) between semantically described objects (o1, o2) with the selected similarity function (F).

11. Device (1) according to claim 10, wherein said at least one parameter includes at least one of:

   - a degree of precision (Degp) input by a user,
   - a complexity ($C_R$) of the ontology,
   - a ratio ($\varphi$) representing a percentage of objects being semantically described with properties,
   - a resource level (R) determined in function of the processing resources available for executing a similarity function, and
   - a variable (W) representative of whether a user can wait for the result of the similarity function.

Fig. 1

**Fig. 2**

| Description Logics | $C_T$ |
|---|---|
| is-a hierarchy | 0 |
| $FL_0$ | 1 |
| $FL^-$ | 2 |
| AL | 3 |
| ALU, ALE, ALQ | 4 |
| ALC, ALEQ, ALUQ | 5 |
| ALCQ, $ALC_{R+}$, ALCH, ALCI | 6 |
| SH, SI, ALCHI, SQ, ALCHQ, ALCIQ | 7 |
| SHI, SHQ, SIQ, ALCHIQ | 8 |
| SHIQ | 9 |

Fig. 3

S1 — $Deg_p=$

S2 — $C_R=$

S3 — $\varphi=$

S4 — $R=$

S5 — $W=$

S6 — $F=f(Deg_p, C_R, \varphi, R, W)$

S7 — $S=F(o1, o2)$

Fig. 4

Fig. 5

Europäisches
Patentamt
European
Patent Office
Office européen
des brevets

# EUROPEAN SEARCH REPORT

Application Number

EP 13 30 5367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ahmed Alasoud ET AL: "An Empirical Comparison of Ontology Matching Techniques", Journal of Information Science August 2009 vol. 35 no. 4, 24 March 2009 (2009-03-24), pages 1-20, XP055071537, DOI: 10.1177/0165551506 Retrieved from the Internet: URL:http://users.encs.concordia.ca/~haarsl ev/publications/JIS2009.pdf [retrieved on 2013-07-16] * especially section 4; page 1 - page 13 * | 1-11 | INV. G06F17/30 |
| A | EGENHOFER M J ET AL: "Determining semantic similarity among entity classes from different ontologies", IEEE TRANSACTIONS ON KNOWLEDGE AND DATA ENGINEERING, IEEE SERVICE CENTER, LOS ALAMITOS, CA, US, vol. 15, no. 2, March 2003 (2003-03), pages 442-456, XP011095940, ISSN: 1041-4347, DOI: 10.1109/TKDE.2003.1185844 * section 2; page 443 * | 8 | |

-/--

TECHNICAL FIELDS SEARCHED (IPC)

G06F

The present search report has been drawn up for all claims

| Place of search | Date of completion of the search | Examiner |
|---|---|---|
| The Hague | 17 July 2013 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 13 30 5367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Jérôme Euzenat ET AL: "Similarity-based ontology alignment in OWL-Lite", ECAI 2004: 16th European Conference on Artificial Intelligence, 22 August 2004 (2004-08-22), XP055055555, Valencia, Spain Retrieved from the Internet: URL:http://www.frontiersinai.com/ecai/ecai2004/ecai04/pdf/p0323.pdf [retrieved on 2013-03-06] * abstract * * section 2 * | 8 | |

-----

TECHNICAL FIELDS
SEARCHED (IPC)

The present search report has been drawn up for all claims

| Place of search | Date of completion of the search | Examiner |
|---|---|---|
| The Hague | 17 July 2013 | Hackelbusch, Richard |

EPO FORM 1503 03.82 (P04C01)